Europäisches Patentamt

European Patent Office

Office européen des brevets

(19)

(11) Veröffentlichungsnummer: **0 033 494**
**B1**

(12) # EUROPÄISCHE PATENTSCHRIFT

(45) Veröffentlichungstag der Patentschrift:
10.10.84

(51) Int. Cl.³: **G 02 C 1/04**

(21) Anmeldenummer: 81100489.4

(22) Anmeldetag: 23.01.81

(54) **Glashalterung bei Brillenfassungen.**

(30) Priorität: 31.01.80 DE 3003472

(43) Veröffentlichungstag der Anmeldung:
12.08.81 Patentblatt 81/32

(45) Bekanntmachung des Hinweises auf die Patenterteilung:
10.10.84 Patentblatt 84/41

(84) Benannte Vertragsstaaten:
AT BE CH DE FR GB IT LI LU NL SE

(56) Entgegenhaltungen:
FR - A - 1 190 806
FR - A - 2 419 526
US - A - 3 209 366
US - A - 4 176 921

(73) Patentinhaber: **Top Color Oberflächen- und Formtechnik
GmbH, Salzstrasse 9, D-8016 Feldkirchen (DE)**

(72) Erfinder: **Walther, Horst, Hertzweg 4, D-7130 Mühlacker
(DE)**

(74) Vertreter: **Zmyj, Erwin, Dipl.-Ing., Postfach 95 04 28,
D-8000 München 95 (DE)**

**Beschreibung**

Die Erfindung bezieht sich auf eine Glashalterung bei Brillenfassungen mit in sich geschlossenen, genuteten Fassungsrändern, die die Gläser am gesamten Umfang fest umschließen, bei denen die Rückwand der Glasnut über einen zusammenhängenden Winkelbereich des Umfangs, der kleiner als 360° ist, weggenommen ist, wobei die Gläser in dem Bereich der fehlenden Rückwand durch am Fassungsrand angeordnete entfernbare Halter gehalten sind.

Bei einer bekannten Glashalterung dieser Art (FR-PS 1 190 806) ist die Rückwand der Nut jeweils in dem der Backe des Mittelteils der Brillenfassung zugewandten Bereich über einen sich über etwa 180° erstreckenden Winkelbereich entfernt. Das Brillenglas kann auf diese Weise seitlich in die Nut eingeschoben werden und wird in dieser einerseits durch die Rückwand und andererseits durch eine am Fassungsrand im Bereich der Backe vorgesehene Verriegelung in Form eines schwenkbar gelagerten Fingers gehalten. Die sichere Halterung des Glases in der Fassung läßt jedoch zu wünschen übrig, da der schwenkbare Haltefinger verhältnismäßig schmal ist und das Glas praktisch nur punktweise hält. Außerdem kann dieser Haltefinger nicht besonders stabil ausgeführt sein, so daß er aufgrund seiner zwangsläufig vorhandenen Eigenelastizität das Glas nicht absolut sicher in der Fassung halten kann. Da zur Sicherung gegen ein selbsttätiges Verschwenken des Haltefingers ein Anschlag vorgesehen ist, wird zwischen dem Scharnier für den Brillenbügel und der Nut im Fassungsrand ein verhältnismäßig großer Platz für den Haltefinger benötigt, so daß die Brillenfassung hierdurch in ihrer äußeren Gestaltung beeinträchtigt ist, d. h. die Fassung ist an dieser Stelle verhältnismäßig breitflächig, was der Forderung nach eng an der Fassung anliegenden, d. h. über die Fassung nur wenig abstehenden Brillenbügeln, zuwiderläuft.

Aufgabe der Erfindung ist es, die Glashalterung der eingangs erwähnten Art so auszugestalten, daß das Glas in der Fassung fest fixiert ist und die Brillenfassung nicht durch zusätzliche Vorsprünge für Halter in ihrer Formgebung nachteilig beeinflußt wird.

Diese Aufgabe wird dadurch gelöst, daß die Rückwand der Glasnut in dem Bereich fehlt, der der die beiden Fassungsränder verbindenden Brücke benachbart ist und daß die Halter für beide Gläser durch die Schenkel eines an der Brillenfassung lösbar festgelegten Sattelsteges gebildet sind, die in ihrem mit den Gläsern zusammenwirkenden Bereich entsprechend der Nutwand ausgebildet sind.

Durch die Aussparung der Nutwand im Bereich der die beiden Fassungsränder verbindenden Brücke ist es möglich, beide Gläser durch einen gemeinsamen Halter festzulegen, so daß bereits durch diese Maßnahme ein Vorteil gegenüber der bekannten Ausführungsform erzielt wird, da dort für jedes Glas ein gesonderter Halter notwendig ist, wodurch der konstruktive Aufwand erhöht wird. Durch die Verwendung eines Sattelsteges als Halter für beide Gläser wird darüber hinaus auch nocht der Vorteil erzielt, daß kein zusätzlicher Bauteil erforderlich ist, da ein Sattelsteg für die Auflage des Brillenmittelteils auf dem Nasenrücken bei sehr vielen Brillenfassungen ohnehin vorhanden ist. Der Sattelsteg, der der Form der Fassungsränder angepaßt werden kann, überdeckt mit seinen verhältnismäßig langen Schenkeln einen großen Bereich des jeweiligen Glases, so daß eine einwandfreie Fixierung des Glases in der Fassung gewährleistet ist. Da der Sattelsteg ein äußerst stabiler Bauteil ist, ist die Gefahr der Verformung des Halters auszuschließen, die bei der bekannten Halterung aufgrund des verhältnismäßig dünnen Haltefingers gegeben ist.

Die lösbare Befestigung des Sattelsteges kann auf verschiedene Art und Weise erfolgen. Eine besonders vorteilhafte Befestigungsmöglichkeit besteht darin, daß der Sattelsteg an seinen freien Enden mit nutartigen Hinterschneidungen der Fassungsränder formschlüssig verbunden und im Bereich der Brücke durch eine mit der Brücke zusammenwirkende Schraube oder Klemme gehalten ist. Es ist aber auch möglich, daß der Sattelsteg zusätzlich zu dieser Maßnahme oder ausschließlich durch Klemmwirkung zwischen den Fassungsrändern gehalten ist. Im letzteren Falle muß selbstverständlich aufgrund eines formschlüssigen Eingreifens des Sattelsteges in einen Teil der Fassung dafür Sorge getragen werden, daß sich dieser aufgrund seiner in Richtung zu seinen freien Enden erweiternden Form nicht von den Fassungsrändern trotz der Klemmwirkung herunterschieben läßt.

Durch die erfindungsgemäße Ausgestaltung ist es möglich, die Vorteile, die sich aus der leichten Auswechselbarkeit der Gläser für den Optiker ergeben, zu nutzen, ohne dabei eine mangelhafte Fixierung der Gläser in der Brillenfassung in Kauf nehmen zu müssen.

Die Erfindung ist in der Zeichnung beispielsweise dargestellt. In dieser zeigt

Fig. 1 eine Rückansicht auf eine Brillenfassung;

Fig. 2 eine nutseitige Ansicht eines Teils des Fassungsrandes der Brillenfassung nach Fig. 1; und

Fig. 3 einen Schnitt nach der Linie III-III in Fig. 1 mit einem aufgesetzten Sattelsteg.

Die Erfindung wird an Hand einer Brillenfassung aus Metall erläutert, da die Anwendung der Erfindung bei solchen Fassungen die größten Vorteile mit sich bringt, da durch die Möglichkeit des leichten Auswechselns der Gläser einteilige Metallfassungen ohne Schließblock hergestellt werden können. Die Erfindung bringt aber auch bei Brillenfassungen aus anderen Materialien, z. B. Kunststoff, Vorteile, weil durch die Anwendung der Erfindung bei Kunststoff-Fassungen das für den Gläserwechsel notwendige Erwärmen und Dehnen der Fassung entfallen kann. Bei diesem Vorgang ist es nämlich nicht immer auszuschließen, daß die teuren Brillengläser beschädigt werden.

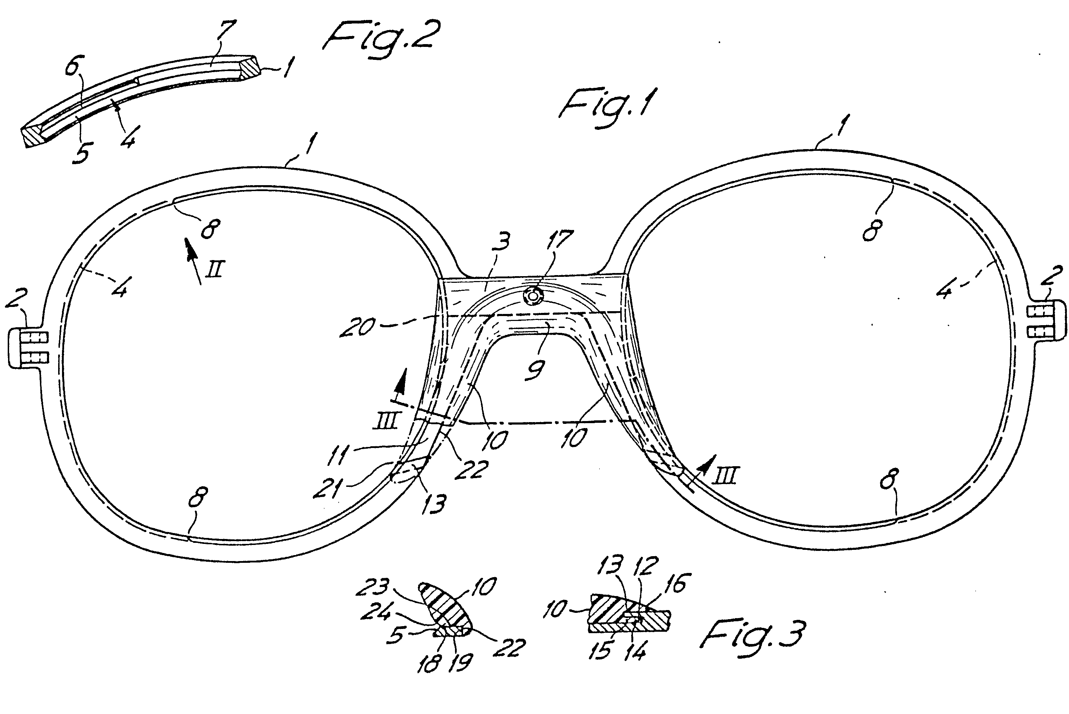

Bei dem in Fig. 1 dargestellten Mittelteil sind mit 1 die Fassungsränder, mit 2 die Backen zur Befestigung der Scharniere für die Brillenbügel und mit 3 eine die Fassungsränder 1 miteinander verbindende Brücke bezeichnet.

Der in sich geschlossene Fassungsrand 1 weist an seiner Innenseite eine ringsum laufende Glasnut 4 auf, in welche ein nicht dargestelltes Glas eingesetzt werden kann. Die Glasnut 4 weist zwei im Winkel zueinander stehende Wände 5 und 6 auf, wie dies aus Fig. 2 hervorgeht. Dabei ist mit 5 die Vorderwand und mit 6 die Rückwand der Glasnut bezeichnet.

Die Rückwand 6 der Glasnut ist in einem der Brücke 3 zugewandten Bereich, der sich über mehr als 180° erstreckt, entfernt, wobei die nach der Entfernung der Rückwand 6 verbleibende Fläche 7 im wesentlichen senkrecht zur Glasebene steht und den Glasrand eng umfaßt, so daß das Glas am Umfang eng in der Fassung gehalten ist. Durch die Entfernung der Rückwand 6 in dem zwischen den Punkten 8 bezeichneten und der Brücke 3 zugewandten Bereich des Fassungsrandes 1 ist es möglich, das Glas in die beide Wände 5 und 6 aufweisende Glasnut 4 einzuschieben und dann in die Fassung einzudrücken, bis es am gesamten Rand an der Vorderwand 5 der Glasnut anliegt. Dabei wird das Glas in radialer Richtung nicht nur durch die beide Wände 5 und 6 aufweisende Glasnut, sondern auch durch die Wand 7 in dem zwischen den beiden Punkten 8 liegenden Bereich der Glasnut formschlüssig gehalten.

Um das Glas auch nach rückwärts, also in einer Ebene senkrecht zur Glasebene zu fixieren, ist ein Sattelsteg 9 vorgesehen, der mit seinen Schenkeln 10 den Fassungsrändern im Bereich 11 angepaßt ist, so daß er von vorne kaum noch wahrnehmbar ist. An den freien Enden der Schenkel 10 weist der Sattelsteg 9 jeweils einen Einschnitt 12 auf, in den eine Zunge 13, die durch eine nutartige Hinterschneidung 14 des Fassungsrandes 1 gebildet ist, eingreift. Der untere der beiden den Einschnitt 12 begrenzenden Stege 15 und 16 greift in die Hinterschneidung 14 ein, wodurch die freien Enden des Sattelsteges 9 formschlüssig mit dem Fassungsrand 1 verbunden sind. Der Mittelteil des Sattelsteges 9 ist mittels einer nicht dargestellten Schraube, die in ein Gewindeloch 17 der Brücke 3 einschraubbar ist, an dieser befestigbar.

Die Schenkel 10 des Sattelsteges 9 weisen einerseits eine im linken Bereich der Fig. 3 ersichtliche Auflagefläche 18 und andererseits eine seitliche Anlagefläche 19 auf, mit denen der Schenkel auf dem Fassungsrand in dem zwischen den Punkten 20 und 21 bezeichneten Bereich aufliegt, der einerseits an der mit 22 bezeichneten Außenseite und andererseits an seiner Oberseite, die mit 23 bezeichnet ist, ausgespart ist, so daß der Schenkel 10 des Sattelsteges 9 in seitlicher Richtung nur wenig über die aussparungsfreie Kontur des Fassungsrandes 1 hervorsteht. Die Fläche 23 befindet sich in Höhe des Schnittpunktes der Nutwände 5 und 6. Die im Bereich 11 fehlende Nutwand 6 wird dabei durch eine der Facettierung des Glasrandes angepaßte Wand 24 eines jeden Schenkels 10 des Sattelsteges 9 ersetzt. In dem mit 11 bezeichneten Bereich, der sich zwischen den Punkten 20 und 21 erstreckt. wird das Glas also durch den Schenkel des Sattelsteges gehalten. Da dieser Bereich einen verhältnismäßig großen Winkelbereich der Glasnut überdeckt, ist das Glas trotz der fehlenden Rückwand 6 ausreichend fixiert.

**Patentansprüche**

1. Glashalterung bei Brillenfassungen mit in sich geschlossenen, genuteten Fassungsrändern, die die Gläser am gesamten Umfang fest umschließen, bei denen die Rückwand der Glasnut über einen zusammenhängenden Winkelbereich des Umfangs, der kleiner als 360° ist, weggenommen ist, wobei die Gläser in dem Bereich der fehlenden Rückwand durch am Fassungsrand angeordnete, entfernbare Halter gehalten sind, dadurch gekennzeichnet, daß die Rückwand (6) der Glasnut (4) in dem Bereich fehlt, der der die beiden Fassungsränder (1) verbindenden Brücke (3) benachbart ist, und daß die Halter für beide Gläser durch die Schenkel (10) eines an der Brillenfassung lösbar festgelegten Sattelsteges (9) gebildet sind, die in ihrem mit den Gläsern zusammenwirkenden Bereich (24) entsprechend der Nutwand (6) ausgebildet sind.

2. Glashalterung nach Anspruch 1, dadurch gekennzeichnet, daß der Sattelsteg (9) der Form der Fassungsränder (1) und derjenigen der sie verbindenden Brücke angepaßt ist.

3. Glashalterung nach Anspruch 1 oder 2, dadurch gekennzeichnet, daß der Sattelsteg (9) an seinen freien Enden mit nutartigen Hinterschneidungen (14) der Fassungsränder (1) formschlüssig verbunden und im Bereich der Brücke (3) durch eine mit der Brücke zusammenwirkende Schraube oder Klemme gehalten ist.

4. Glashalterung nach einem der Ansprüche 1 bis 3, dadurch gekennzeichnet, daß der Sattelsteg (9) durch Klemmwirkung zwischen den Fassungsrändern (1) gehalten ist.

**Claims**

1. A lens mounting in spectacle frames having self contained, grooved rims which firmly engage the lenses around their entire circumference, in which the rear wall of the lens groove is eliminated over an uninterrupted angular portion of the circumference which is smaller than 360°, the lenses being held in the area of the missing rear wall by means of removable holders disposed on the frame rim, characterized in that the rear wall (6) of the lens groove (4) is missing in the area adjoining the bridge (3) connecting the two frame rims (1), and that the holders for both lenses are embodied by the shanks (10) of a nosepiece (9) detachably affixed to the spectacle frame, the shanks being embodied in the area (24) thereof cooperating with the lenses in a manner corresponding to the groove wall (6).

2. A lens mounting as defined by claim 1, characterized in that the nosepiece (9) is adapted to the shape of the frame rims (1) and to the shape of the bridge connecting them.

3. A lens mounting as defined by claim 1 or 2, characterized in that the nosepiece (9) is positively connected at its free ends with groove-like undercuts (14) of the frame rims (1) and is held in the area of the bridge (3) by means of a screw or clamp cooperating with the bridge.

4. A lens mounting as defined by one of the claims 1—3, characterized in that the nosepiece (9) is held by clamping action between the frame rims (1).

## Revendications

1. Fixation de verres pour montures de lunettes comprenant des cercles rainurés fermés qui entourent rigidement les verres sur tout leur périmètre et dans lesquels la paroi arrière de la rainure de verre est enlevée sur une région angulaire continue du périmètre qui est inférieure à 360°, les verres étant tenus dans la région où la paroi arrière manque par des organes de retenue amovibles montés sur le cercle, caractérisé en ce que la paroi arrière (6) de la rainure de verre (4) est absente dans la région qui est voisine du pont (3) qui relie les deux cercles (1) et en ce que les organes de retenue prévus pour les deux verres sont formés par les branches (10) d'une pièce d'entrée (9) fixée à la monture de lunettes par une liaison démintable, qui sont d'une configuration correspondant à la paroi (6) de la rainure dans leur région (24) qui coopère avec les verres.

2. Fixation de verres selon la revendication 1, caractérisé en ce que la pièce d'entrée (9) est adaptée à la forme des cercles (1) et à celle du pont qui les réunit.

3. Fixation de verres selon la revendication 1 ou 2, caractérisé en ce que la pièce d'entrée (9) est fixée par sûreté de forme, à ses extrémités libres, à des goujures (14) en forme de rainures des cercles (1) et est tenue dans la région du pont par une vis ou une pince qui coopère avec le pont.

4. Fixation de verres selon l'une des revendications 1 à 3, caractérisé en ce que la pièce d'entrée (9) est tenue entre les cercles (1) de la monture par un effet de coincement.

Fig.2

Fig.1

Fig.3

0 033 494